**Europäisches Patentamt**

**European Patent Office**

**Office européen des brevets**

(19)

(11) Veröffentlichungsnummer: **0 150 396**
**B1**

(12) # EUROPÄISCHE PATENTSCHRIFT

(45) Veröffentlichungstag der Patentschrift:
**24.02.88**

(21) Anmeldenummer: **84115439.6**

(22) Anmeldetag: **14.12.84**

(51) Int. Cl.⁴: **G 01 P 5/20**, G 01 F 1/704

(54) Verfahren und Vorrichtung zur optischen Messung der Strömung eines Fluids.

(30) Priorität: **24.12.83 DE 3347092**

(43) Veröffentlichungstag der Anmeldung:
**07.08.85 Patentblatt 85/32**

(45) Bekanntmachung des Hinweises auf die Patenterteilung:
**24.02.88 Patentblatt 88/8**

(84) Benannte Vertragsstaaten:
**FR GB IT SE**

(56) Entgegenhaltungen:
**DE-A-1 934 583**
**DE-A-2 449 358**
**DE-A-3 145 987**
**US-A-3 739 636**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Hofmann, Jörg, Dipl.- Ing., Habsburgerstrasse 8, D-8000 München 40 (DE)**
Erfinder: **Ding, Kurt, Dr. Dipl.- Phys., Leonhardstrasse 4, D-8900 Agsburg (DE)**

## Beschreibung

Die Erfindung betrifft ein Verfahren zur optischen Messung einer zeitlich periodischen Strömung eines Fluids, in dem sich Streuteilchen befinden, durch Erfassen der Laufzeiten der Teilchen über eine Meßstrecke zwischen zwei Lichtstrahlen, wovon einer für die Erzeugung von Startimpulsen und einer für die Erzeugung von Stoppimpulsen dient und die Summe der Teilchen, die den in einem zeitlichen Meßfenster in vorbestimmten diskreten Winkelschritten um den Startstrahl herumgeführten Stoppstrahl passieren, ermittelt und die Ereignisse an Start- und Stoppstrahl korreliert werden.

Ein bekanntes Verfahren zur optischen Geschwindigkeitsmessung wird Laser-Zweitstrahlverfahren genannt (DFVLR-Nachrichten, Heft 12, 1973, Seiten 506 bis 508).

Es kann zur Feststellung einer mittleren Strömungsgeschwindigkeit nach Betrag und Richtung eingesetzt werden, sofern die Strömung stationär bzw. "quasi stationär" ist.

Ein anderes bekanntes Verfahren (DE-A-21 26 859) dient der Messung der Wandergeschwindigkeit von Gasen in einer Flüssigkeit, die ein feststehendes Rohr durchströmt.

Für instationäre Strömungen ist das System nicht geeignet und auch nicht zur Erfassung einer Strömungsrichtung. Da sich die Analyse einer Anzahl von Kanälen bedient, die durch ihre zeitliche Breite bestimmt sind, spricht man auch von einem "Mehrkanalsystem".

Der erstgenannte Stand der Technik wurde verbessert durch die Verfahren, wie sie in DE-A-2449 358 und DE-A-3145 897 beschrieben sind.

Gemäß beiden Dokumenten wird jedoch stets an der gleichen Stelle gemessen, nämlich dort, wo man eine mittlere Strömungsgeschwindigkeit vermutet. Dabei wurde die Annahme zugrunde gelegt, daß für jede Verteilung die gleiche Anzahl von Startereignissen, d.h. in das Meßvolumen eintretender Teilchen, zu erwarten sei. Dann müssten jedoch die Strömungsverhältnisse an der gewählten Meßstelle während der gewählten Zeitspanne wenigstens im Mittel gleich bleiben. Diese Annahme wird als Voraussetzung für die Messungen auch in der verfahrensmäßig verbesserten DE-A-3145 987 beibehalten.

Der Erfindung liegt die Aufgabe Zugrunde, ein Auswerteverfahren und eine -vorrichtung für das optische Messen einer periodischen Strömung eines mit Streuteilchen beladenen Fluids zu schaffen, das bzw. die es gestattet, eine auf die Startereigniszahl bezogene Häufung von Meßsignalen (korrelierter Ereignisse) zu erfassen, insbesondere dann, wenn eine räumliche und zeitliche Variation der Teilchenrate auftritt.

Die Lösung dieser Aufgabe ist, soweit es das Verfahren betrifft, in Anspruch 1 enthalten und soweit es die Vorrichtung zur Durchführung des Verfahrens betrifft in Anspruch 2 wiedergegeben.

Der wesentlichste Vorteil der Erfindung ist die Möglichkeit zur Erfassung einer Änderung der Teilchenraten innerhalb einer Strömungsperiode in einer Vielzahl von Meßfenstern, d.h., eine größere Datenmenge (Teilchenmenge) kann in geringerer Zeit erfaßt und verarbeitet werden und es sind präzisere Aussagen bezüglich der Verteilung innerhalb einer Strömungsperiode als bisher möglich.

Dies ist besonders vorteilhaft, wenn die Erfindung in Zusammenhang mit schaufelbestückten drehenden Anordnungen angewandt werden soll.

Die erfindungsgemäße Vorrichtung gestattet auch eine genaue Untersuchung des teilchenbeladenen Fluidstroms hinsichtlich nicht nur der Geschwindigkeit, sondern auch ihrer Richtung und Turbulenz. Die statistische Auswertung erfolgt bei der Erfindung in einer elektronischen Auswerteschaltung. Das Beziehen der Häufigkeit der Start-/Stopp-Ereignisse auf die Startereigniszahl kann als "Normierung" in der Art eines Eichvorganges angesehen werden. Eine solche "Normierung" ist notwendig um die unvermeidlichen zeitlichen und räumlichen Schwankungen der Teilchengeschwindigkeit auszugleichen. Durch einfaches Festlegen einer Meßzeit in jeder Meßposition kann eine auf die Startereigniszahl bezogene Ermittlung einer Häufung von Signalen nicht erfolgen.

Die Erfindung benützt ein optisches Verfahren zur Untersuchung der Strömung eines mit Streuteilchen beladenen Fluids mit einem Zweistrahlströmungsmesser und einer Vielzahl von Meßfenstern.

Die Auswerte-Elektronik ist nach dem Prinzip ausgelegt, für jedes Meßfenster getrennt die Startereignisse zu zählen, um nach Abschluß einer Messung die Zahl der korrelierten Start-Stopp-Ereignisse mit der zugehörigen Zahl der Start-Ereignisse ins Verhältnis zu setzen. Dies hat den Vorteil, daß sichergestellt ist, daß die Messung erst dann beendet wird, wenn in jedem Meßfenster die geforderte Mindestzahl von Start-Ereignissen stattgefunden hat, zum anderen werden nur so Messungen in verschiedenen Winkelpositionen vergleichbar.

Mit Hilfe der Auswerte-Elektronik wird also sowohl eine definierte Versuchsbeendigung als auch eine separate Start-Ereignis-Zählung möglich.

Die Erfindung wird nachstehend anhand von Ausführungsbeispielen erläutert. Sie ist in den beigefügten Zeichnungen rein schematisch dargestellt.

Es zeigen,

Fig. 1 eine Kurve der Ereignishäufigkeit (Passieren eines Lichtstrahls), verteilt über die Laufzeit,

Fig. 2 das Bewegen eines Stopp-Strahls in definierten Winkelschritten um einen Start-Strahl herum,

Fig. 3 Ereignishäufigkeit, verteilt über die Laufzeiten bei bestimmten Winkelpositionen,

Fig. 4 die Integration der Laufzeitverteilungen aus Fig. 3,

Fig. 5 die Anwendung der Erfindung bei einem schaufelbestückten Rotor,

Fig. 6 einen Strahlengang, gesehen in Radialrichtung zum Rotor,

Fig. 7 einen Strahlengang gesehen im Längsschnitt durch einen Radialverdichter,

Fig. 8 die Auswerte-Elektronik mit ihren Ein- und Ausgängen und

Fig. 9 das Blockschaltbild einer ausgeführten Auswerte-Elektronik.

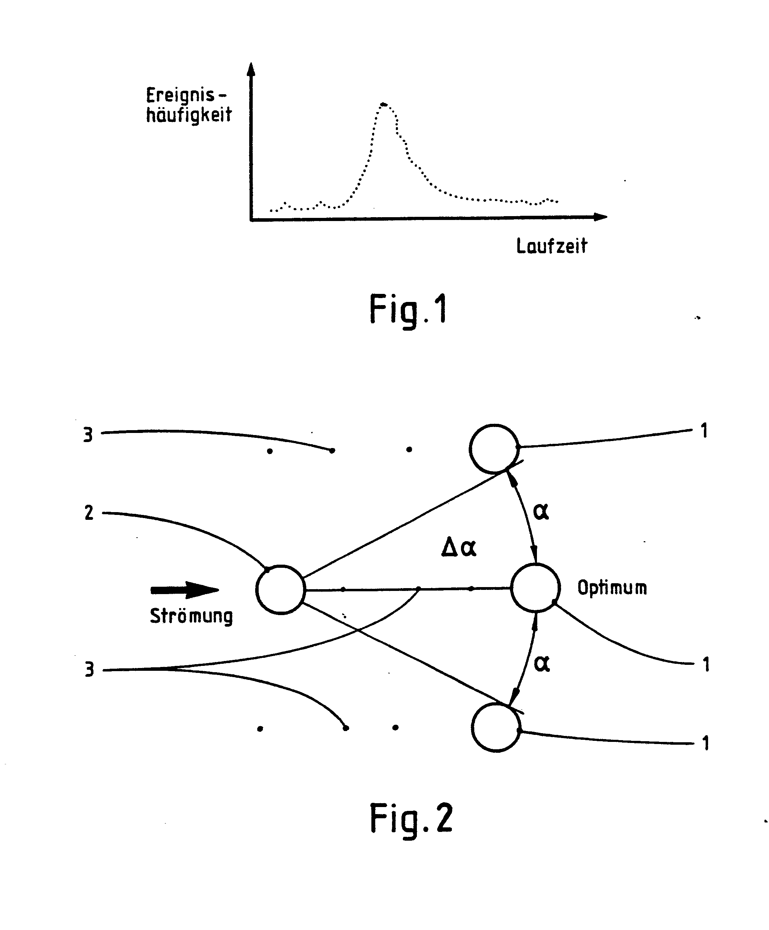

Die Ereignishäufigkeit ist in Fig. 1 über der Zeit aufgetragen.

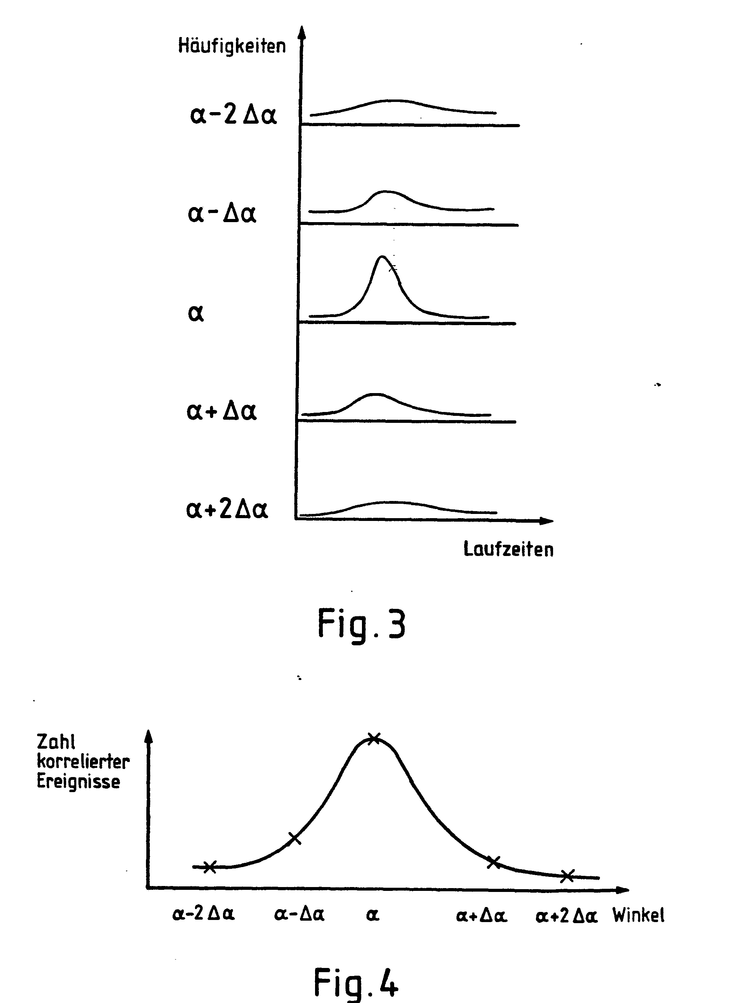

Bei der Erfindung wird der Stoppstrahl 1 in diskreten Winkelschritten α um den zentralen Startstrahl 2 herumgeführt (Fig. 2). Auf diese Weise werden Häufigkeitsverteilungen über die Laufzeit in der jeweiligen Winkelposition gewonnen (Fig. 3) und es läßt sich leicht erkennen, wo eine Häufung vorliegt und wo nicht (Rauschen).

Auf diese Weise läßt sich die Strömungsrichtung bestimmen. Start- und Stoppstrahl sind dann in Hauptströmungsrichtung ausgerichtet, wenn auf eine bestimmte Anzahl Startimpulse die maximale Anzahl von korrelierten Start-Stoppimpulsen kommt. Nur dann durchquert nämlich die Masse der Teilchen, die den Start-Strahl passiert haben, anschließend auch den Stopp-Strahl und löst die jeweiligen Ereignisse aus. Die Teilchen sind mit 3 bezeichnet.

Mit Zählern wird die Summe der Startereignisse ermittelt. Die korrelierten Start-Stoppereignisse werden über Summation der Ereignisverteilung erhalten und mit den Startereignissen normiert (ins Verhältnis gesetzt). So entsteht in Abhängigkeit von der jeweiligen Winkelposition eine Verteilung, deren Mittelwert den mittleren Strömungswinkel angibt. Siehe dazu Fig. 4.

Turbulenzen lassen sich dadurch ermitteln, daß z. B. in Fig. 3 die Breite der Häufigkeitsverteilung ausgewertet wird.

Eine bevorzugte Anwendung der Erfindung ist bei drehenden Anordnungen, wie mit Schaufeln 4 bestückte Rotoren 5, insbesondere von Verdichtern oder Turbinen.

Auch für (Kolben-)Motoren oder -pumpen ist die Erfindung geeignet. (Mit rotierenden oder hin- und her bewegten Teilen).

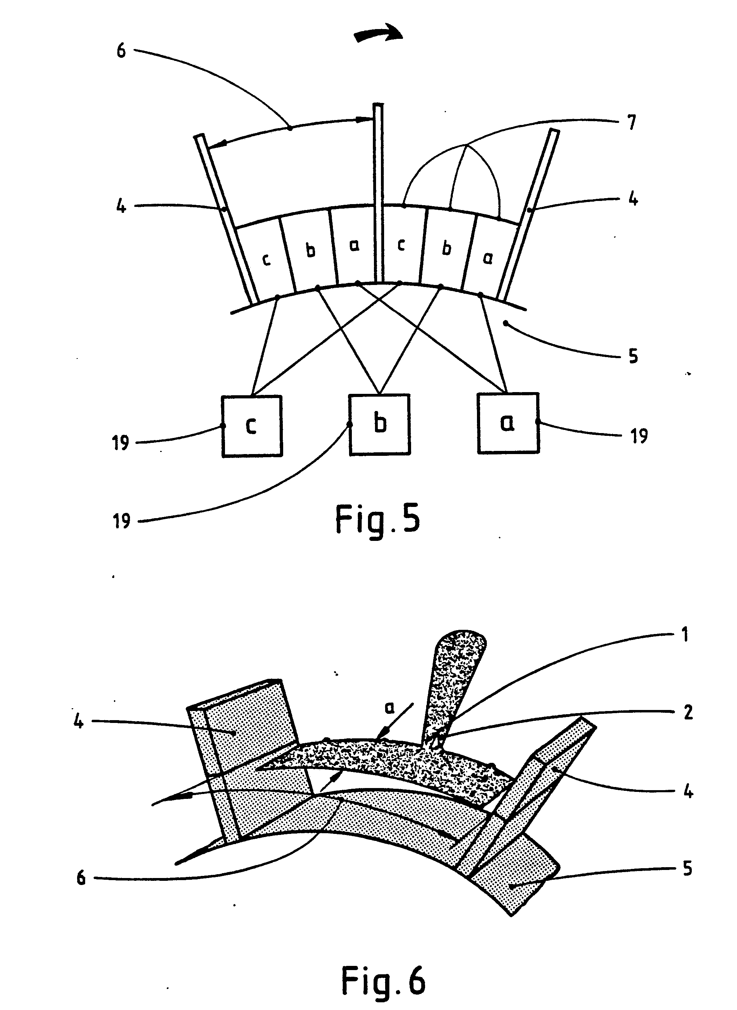

Wie Fig. 5 zeigt (Drehrichtung ist im Pfeil oben angegeben = Uhrzeigersinn), sind in jedem Schaufelkanal 8, der durch Schaufelwände seitlich begrenzt wird, eine Anzahl Meßfenster 7, z. B. drei Meßfenster a, b, c, vorgesehen, mit zugehörigen Datenspeichern 19.

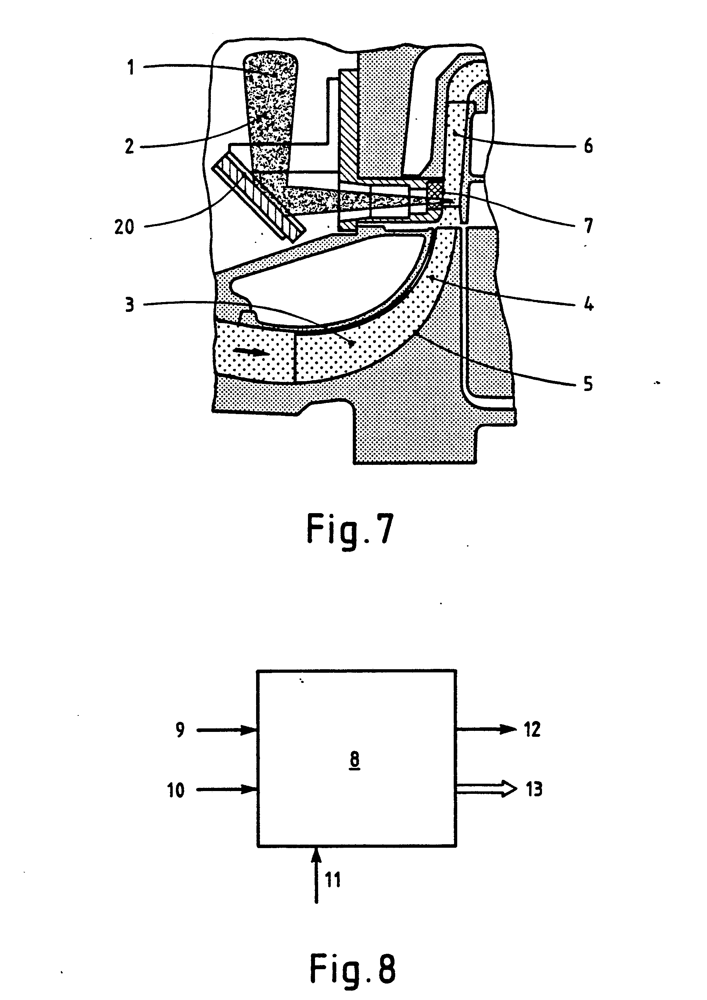

Die Zuordnung der Lichtstrahlen 1, 2 des Zweistrahlströmungsmessers (optischer Meßkopf) zum Schaufelkanal 6 einer Axialströmungsmaschine mit Meßfenster ist in Fig. 6 und eine andere in Fig. 7 dargestellt. Fig. 7 zeigt ein Ausführungsbeispiel mit einer Radial-Strömungsmaschine.

Dem feststehenden Teil mit Diffusor 6 ist die Meßvorrichtung zugeordnet, hier das Meßfenster 7, das von partikelbeladener Luft durchströmt wird.

Die Strahlen (1, 2) des Laserlichtes werden über einen Spiegel 20 in das Fenster 7 umgelenkt, um dort eine gewünschte Meßstrecke zu definieren.

Beide Lichtstrahlen werden von einem Gas-Laser erzeugt, der bevorzugt von einer Triggerschaltung einer Steuerelektronik (nicht dargestellt) elektronisch ausgeblendet wird, wenn eine Schaufel 4 vor dem Strahlenaustritt des Lasers erscheint. Der Strahlendurchmesser liegt bevorzugt im Bereich einiger Mikrometer. Auch der Strahlenabstand a kann sehr gering gewählt werden, (a = Meßstrecke) bevorzugt etwa $< 10^{-3}$ m. Mit Hilfe derartiger Laser sind feinste Streuteilchen, wie Staubteilchen, noch leicht erfassbar. Sobald sie einen Strahl passieren, lösen sie als Ergebnis einen Meßimpuls aus, der als Startsignal einem Eingang 9 der Auswerte-Elektronik 8 (Fig. 8) zugeführt wird. Auf der gleichen Eingangsschiene (Bus) liegt die zugehörige Meßfensternummer am Eingang 10. Ein anderer Eingang 11 liefert als festeinzustellende Größe die Mindeststartereigniszahl. Ein Ausgang 12 der Auswerte-Schaltung 8 liefert ein Signal zur Beendigung der Messung. Ein Ausgang 13 liefert über Schnittstelle 17 die Zählerstände der Startereignisse zur Aufnahme in einen Rechner 18.

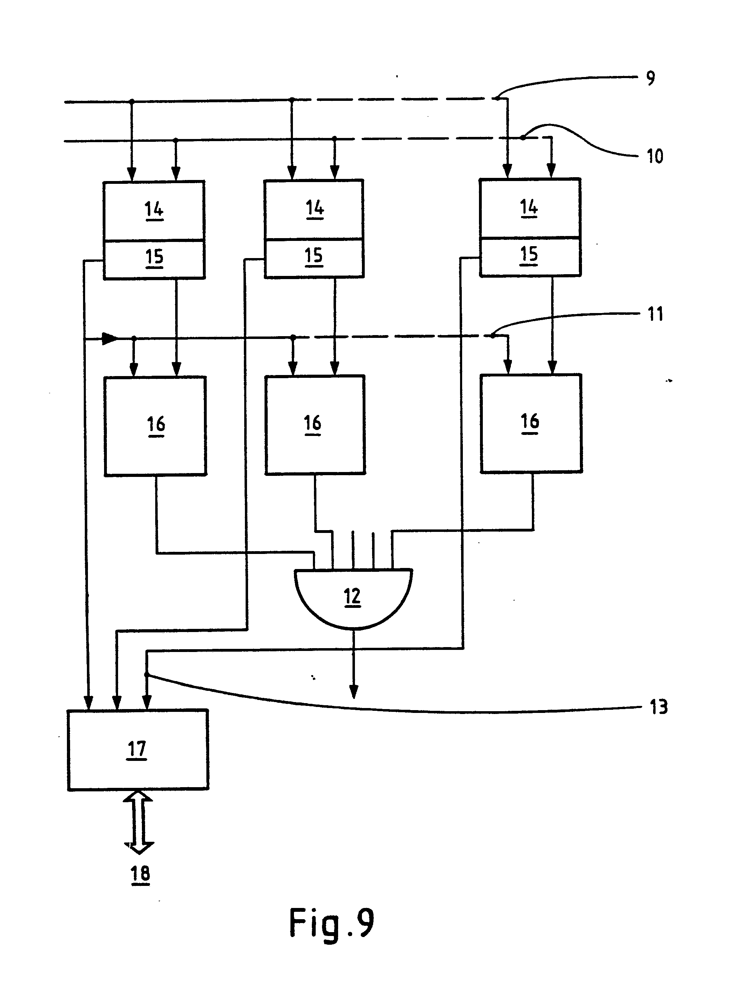

Die Inhalte der Zähler 14 werden angezeigt (in Fig. 9) z. B. in LED's oder LCD's 15 und über die Komparatoren 16 mit einer Mindestereigniszahl vom Eingang 11 verglichen. Die UND-verknüpften Ausgänge der Komparatoren bilden bei 12 das Signal zur Beendigung der Messung.

**Patentansprüche**

1. Verfahren zur optischen Messung einer zeitlich periodischen Strömung eines Fluids, in dem sich Streuteilchen befinden, durch Erfassen der Laufzeiten der Teilchen über eine Meßstrecke zwischen zwei Lichtstrahlen, wovon einer für die Erzeugung von Startimpulsen und einer für die Erzeugung von Stoppimpulsen dient und die Summe der Teilchen die den in einem zeitlichen Meßfenster in vorbestimmten diskreten Winkelschritten um den Startstrahl herumgeführten Stoppstrahl passieren, ermittelt und die Ereignisse an Start- und Stoppstrahl korreliert werden, dadurch gekennzeichnet, daß die Strömungsperiode in eine Vielzahl von Meßfenstern unterteilt wird, die erzeugten Impulse nach der Häufigkeit der Startereignisse und der Zahl der korrelierten Start-/Stoppereignisse für jedes Meßfenster getrennt in separaten Zählern erfaßt werden und danach die Zahl dieser korrelierten Start-/Stoppereignisse für das jeweilige Meßfenster in einem Rechner zu der zugehörigen Zahl der Startereignisse ins Verhältnis gesetzt wird.

2. Vorrichtung zur Durchführung des Verfahrens nach Anspruch 1, mit einer Einrichtung zur Erzeugung von als (Start- bzw. Stoppstrahl (1, 2) dienenden Lichtstrahlen zwischen denen eine Meßstrecke gebildet ist, einer Einrichtung (19) zur Erfassung der Ereignisse an den Lichtstrahlen (1,2), die die Meßstrecke bilden, und mit einer nachgeschalteten Auswerteelektronik (8), dadurch gekennzeichnet, daß die Auswerteelektronik (8) einen Eingang (9) aufweist, der von den Startimpulsen beaufschlagt wird, die von jedem Teilchen erzeugt werden, das den Startstrahl (1) durchläuft und daß auf der gleichen Eingangsschiene (Bus) an dem Eingang (10) die zugehörige Meßfensternummer anliegt, die aus der Vielzahl von Meßfenstern (7) in die die Strömungsperiode unterteilt ist, ausgewählt ist, daß jedem Meßfenster (7,a,b,c) ein separater Zähler (14) und ein elektronischer Datenspeicher (19) zugeordnet sind und an einem Ausgang (13) die Zahl der Startereignisse aller Zähler (14) sowie die Stoppimpulse von den Teilchen, die den Stoppstrahl (2) durchlaufen anliegt und über eine Schnittstelle (17) einem Rechner (18) zugeführt werden, in dem die Zahl der korrelierten Start-/Stoppereignisse für das jeweilige Meßfenster (a,b,c) zu der zugehörigen Zahl der Startereignisse ins Verhältnis gesetzt wird und daß an der gleichen Ausgangsschiene am Ausgang (12) ein Impuls zur Beendigung der Messung anliegt, wenn in jedem Meßfenster (a, b, c) eine bestimmte Mindestzahl von Startereignissen am Eingang (11) vorliegt, welche mittels Komparatoren (16) verglichen wird.

**Claims**

1. Process for the optical measurement of a periodic flow of a fluid per unit time, in which there are scattered particles by detecting the travel times of the particles over a measured distance between two light rays, one of which is used for generating starting pulses and the other for generating stop pulses and the sum of the particles which pass the stop ray which is drawn around the start ray in a time-related measuring window in predetermined discreet angular steps is determined and the events at the start and stop ray are correlated, characterised in that the flow period is divided into a multiplicity of measuring windows, the generated pulses are picked up for each measuring window separately in separate counters according to the frequency of the start events and the number of the correlated start/stop events and after this the number of these correlated start/stop events are brought into a ratio with the associated number of start events in a computer for the corresponding measuring window.

2. Apparatus for carrying out the process according to claim 1 with a device for generating light rays used as a start or stop ray (1, 2) between which a measuring distance (a) is formed, a device (19) for detecting the events at the light rays (1,2) which form the measuring distance and with an after-connected electronic evaluating system (8), characterised in that the electronic evaluating system (8) is provided with an input (9) which is acted on by the start pulses generated by each particle passing through the start ray (1) and that the associated measuring window number which is selected from the multiplicity of measuring windows (7) into which the flow period is divided, is located at the input on the same input bus, that a separate counter (14) and an electronic data store (19) are associated with each measuring window (7;a;b;c) and the number of the start events of all counters (14) and the stop pulses from the particles passing through the stop ray (2) are located at an output (13) and fed to a computer (18) via an interface (17), in which the number of the correlated start/stop events for the corresponding measuring window (a;b;c) are brought into a ratio with the associated number of the start events and that a pulse for ending the measurement is located at the same output bus at the output (12) when in each measuring window (a;b;c) a predetermined minimum number of start events is present at the input (11), which is compared by means of comparators (16).

**Revendications**

1. Procédé pour mesurer optiquement un écoulement périodique d'un fluide dans lequel se trouvent dispersées des particules, en détectant les temps de parcours des particules sur l'étendue d'une section de mesure entre deux rayons lumineux, dont l'un sert à produire des impulsions de démarrage et l'autre des impulsions d'arrêt et la somme des particules qui passent le rayon d'arrêt déplacé dans une fenêtre temporelle de mesure selon des pas angulaires discrets prédéfinis, est déterminée et les événements au rayon de démarrage et au rayon d'arrêt sont corrélés, procédé caractérisé en ce que la période d'écoulement est subdivisée en une pluralité de fenêtres de mesure, les impulsions obtenues selon la fréquence des événements au démarrage et le nombre des éléments corrélés au démarrage et à l'arrêt pour chaque fenêtre de mesure étant saisie séparément dans des compteurs distincts, et ensuite le nombre de ces événements corrélés au démarrage et à l'arrêt pour la fenêtre de mesure considérée étant mis en rapport dans un calculateur avec le nombre correspondant des événements au démarrage.

2. Dispositif pour la mise en oeuvre du procédé selon la revendication 1, avec un moyen pour produire des rayons lumineux jouant respectivement le rôle de rayon de démarrage et de rayon d'arrêt (1, 2), entre lesquels est délimitée une section de mesure (a), avec un moyen (19) pour détecter les événements aux rayons lumineux (1, 2), qui délimitent la section de mesure, et avec une électronique d'exploitation branchée à la suite, dispositif caractérisé en ce que l'électronique d'exploitation (8) comporte une entrée (9) recevant les impulsions de démarrage qui sont produites par chaque particule traversant le rayon de démarrage (1) et que sur la même ligne d'entrée (Bus) est appliqué à l'entrée (10) le numéro de fenêtre de mesure correspondant qui est sélectionné à partir de la pluralité des fenêtres de mesure (7) en lesquelles est subdivisée la période d'écoulement, tandis qu'à chaque fenêtre de mesure (7; a, b, c) sont associés un compteur (14) distinct et une mémoire électronique de données (19), et qu'à une sortie (13) est appliqué le nombre des événements de démarrage de tous les compteurs (14) ainsi que les impulsions d'arrêt émises par les particules qui traversent le rayon d'arrêt (2), ces données étant transmises par l'intermédiaire d'une interface (17) à un calculateur (18) dans lequel le nombre des événements corrélés de démarrage et d'arrêt, pour la fenêtre de mesure (a, b, c,) considérée, est mis en rapport avec le nombre correspondant des événements de démarrage, cependant que sur la même ligne de sortie, à la sortie (12), est appliquée une impulsion pour mettre fin à la mesure lorsqu'il y a dans chaque fenêtre de mesure (a, b, c) un nombre minimal déterminé d'événements de démarrage à l'entrée (11), ces éléments étant comparés au moyen de comparateurs (16).

Fig.1

Fig.2

**Fig. 3**

**Fig. 4**

Fig.5

Fig.6

**Fig. 7**

**Fig. 8**

Fig.9